Europäisches Patentamt

European Patent Office

Office européen des brevets

(11) Publication number: **0 036 769**
A1

# EUROPEAN PATENT APPLICATION

(21) Application number: 81301211.9

(51) Int. Cl.³: **G 06 K 7/10, A 47 F 9/02**

(22) Date of filing: **20.03.81**

(30) Priority: **21.03.80 GB 8009538**

(71) Applicant: **J. SAINSBURY LIMITED, Stamford House Stamford Street, London SE1 9LL (GB)**

(43) Date of publication of application: **30.09.81**
**Bulletin 81/39**

(72) Inventor: **Winson, Richard Norman, 272 Upland Road, Dulwich London SE22 (GB)**
Inventor: **Inglis, Christopher James, 1 Queen Mary's Avenue, Carshalton Beeches Surrey (GB)**

(84) Designated Contracting States: **AT BE CH DE FR IT LI LU NL SE**

(74) Representative: **Palmer, Roger et al, Page, White and Farrer 27 Chancery Lane, London WC2A 1NT (GB)**

(54) **Checkout system.**

(57) A checkout system suitable for a supermarket outlet comprises an upstream goods reception section (13), a douwnstreams goods discharge section (14) and an intermediate conveyor section (20) having a horizontal transport conveying surface. An optical reader (25) comprising a laser scanner is provided adjacent the horizontal transport surface for reading code markings on each article. The horizontale transport conveying surface comprises a flat transparent annular plate (21) arranged to be rotated in a circular path.

## Checkout System

The invention relates to a checkout system for registering details of articles, such as those sold at a supermarket outlet.

In order to improve the efficiency of an operator registering goods at a checkout point of the type used in a
supermarket, it is known to mark the goods with a machine
readable code which may indicate the price and/or other
details of the product.  In this way the price or other
details of each article can be determined by use of a
machine to read the coding rather than the operator
inspecting the goods and operating a manual register in
response to a visual marking read by the operator.
Various optical reading devices are known but current
systems generally require the operator to pick up each
article with one hand at an upstream input position,
pass the item to the other hand and at the same time
find the coded region on the article, orientate the
article so that the coding can be seen by the reader and
then pass the article past the reader to an output or
downstream position.  In order to achieve satisfactory
operation by the reader such a system has required a
substantial path of travel while the item is held in the
operator's hand.  This not only increases the overall
physical effort required by the operator but limits the
speed at which articles may be processed through the
checkout point.

It is an object of the present invention to provide an
improved checkout system at which goods bearing codings
for use in registering the goods at a checkout position
may be transported past a reader used to record details
of goods checked out.

The present invention provides a checkout system for
registering articles bearing code markings, such as those sold at a supermarket outlet, which checkout system comprises an upstream reception section for receiving goods to be checked out, a downstream discharge section from which the goods may be removed after checkout and an intermediate section for conveying the goods from the upstream section to the downstream section and registering the goods on passage through the intermediate section, said intermediate section comprising a conveyor with a horizontal transport conveying surface, means for driving the conveying surface past an optical reader arranged to read the code markings on each article while conveyed on said conveying surface, the intermediate section being arranged so that goods may be readily passed from the upstream section onto the conveying surface and automatically discharged onto the downstream section, said checkout system further including registering means coupled to said optical reader to provide a visual indication of details of the goods checked out.

Preferably said registering means is adapted to provide a cumulative record of sales data from the checkout position.

Preferably the registering means forms part of a computer system arranged to provide sales data for management control purposes.

By providing a horizontal transport conveying surface in said intermediate section, an operator of the checkout system need only handle each item on passage from the upstream reception section to said conveying surface and orientating each article during said passage so that any code markings can be read by the optical reader. The horizontal conveying surface can be located very closely adjacent the upstream reception section so that the operator has to move each article through a very short distance thereby enabling improved efficiency in passing a succession of articles through the checkout system.

Preferably the optical reader is located below the horizontal transport conveying surface and said surface is transparent.

Preferably the horizontal transport conveying surface is arranged to be driven in a rotary motion about a vertical axis.

Preferably the horizontal transport conveying surface comprises a flat, transparent annular plate.

Preferably the annular plate is made of glass.

Preferably an electric motor is provided to rotate the annular plate.

Preferably a system is provided whereby the annular plate stops rotating when the optical reader fails to register an item.

Preferably a barrier is provided above the conveying path of the annular plate adjacent the downstream discharge section whereby articles are deflected by said barrier from the plate onto the downstream discharge section.

Preferably the upstream reception section includes a conveyor for moving goods towards the intermediate section.

Preferably the downstream discharge section includes a conveyor for transporting goods away from the intermediate section.

Preferably the optical reader comprises a laser scanner.

Preferably the laser scanner comprises a housing having an upward facing scanning window located below said annular plate in the conveying path through the intermediate section.

Preferably an optical actuating system is located above the annular plate at a position upstream of said window and arranged to initate operation of the laser scanner on detecting arrival of an article on the plate.

Preferably a further optical actuating device is located above the annular plate downstream of said window and arranged to terminate operation of the laser as each article passes the further optical device after passing over said window.

Said optical actuating devices for controlling operation of the laser scanner may be arranged to provide optical beams extending across the path of the annular plate on either side of the window.

An embodiment of the invention will now be described by way of example and with reference to the accompanying drawings in which:-

Figure 1 is a perspective view of a checkout system in accordance with the present invention,

Figure 2 is a vertical section through a central part of the system shown in Figure 1, and

Figure 3 is a plan view of a further embodiment of the invention.

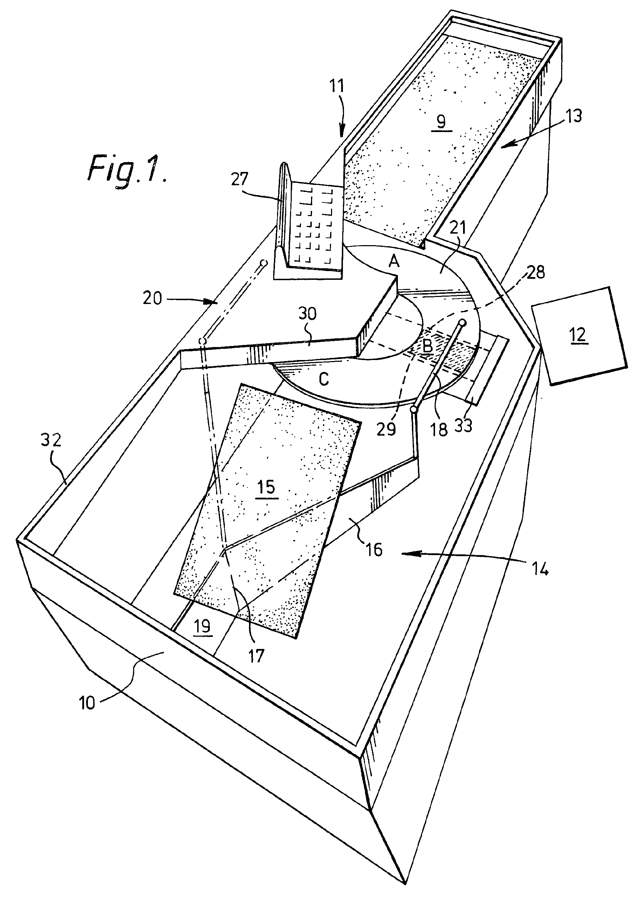

Figure 1 shows the overall layout of a checkout station for use at a supermarket outlet. A system 11 is provided for transporting goods and pricing them while an operator is seated at a station marked 12. The checkout system 11 comprises an upstream reception section 13 for receiving goods to be checked out. A customer may unload the goods he wishes to purchase onto the upstream reception section 13 and this includes a flat horizontal conveyor 9 which may be continuously or intermittently advanced by a motor drive to move the goods nearer the operator at the station 12. The system 11 includes a downstream discharge section 14 from which the goods may be removed by the customer after checkout. The downstream section 14 includes a conveyor 15 arranged to advance the goods towards the discharge end 10. The downstream section is divided into two halves by a vertical barrier 16 arranged to move about a vertical pivot axis 17. The barrier 16 is movable by a control lever 18 which extends towards the operator and may be manually adjusted by the operator sitting at the station 12. The barrier 16 is shown in a position in full lines in Figure 1 in which the conveyor 15 conveys goods into the left hand side of a partition wall 19 shown in Figure 1. When moved to the alternative position indicated in dotted lines, the conveyor 15 would operate to convey goods into the right hand side of the wall 19 as shown in Figure 1. In this way one customer may be removing goods from one half of the discharge end 10 while the goods for another customer are being conveyed by the conveyor 15 towards the other side of the discharge end 10 thereby improving efficiency.

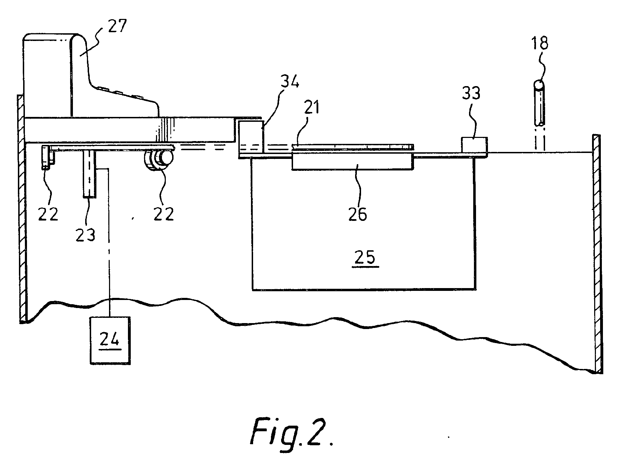

The upstream reception section 13 and downstream discharge section are separated by an intermediate section 20 at which the goods are registered. The intermediate section comprises a horizontal transport conveying surface provided by a flat annular transparent glass plate 21. As shown in Figure 2, the plate 21 is mounted on a number of flanged wheels 22 located around its periphery on the underside of the plate. A drive roller 23 engages the undersurface of the plate and is connected to a motor 24 so as to rotate the conveying plate 21 in a rotary motion about a vertical axis. The plate is mounted above an optical reader 25 in the form of a laser scanner. The reader 25 has an upward facing window 26 in its upper face immediately below the conveying path of the transparent plate 21. Operation of the optical reader 25 causes the laser scanner to operate through the window 26 and through the plate 21 which is transparent to the radiation used so that the reader may read any code markings indicating price and/or other details of the product, on a face of the product correctly orientated so as to face the plate 21. The reader 25 is coupled via a computer to a price register 27 mounted on top of the intermediate section of the checkout system. The register 27 may be a cash register providing a visual indication of the price of the goods checked out. This may be an electronic display in a window together with a receipt ticket or list as well as a cash register if required.

In use, an operator sitting at position 12 will pick up goods one at a time from the conveyor in the upstream section 13 and look for the region of the item bearing a price and/or product code, which may for example be in the form of a bar code. The item is then orientated so that the face bearing the code is directed downwardly so that it may be read by the laser scanner and the item is then placed onto the conveying plate 21 at the point marked A in Figure 1. This requires only a short distance of manual transport of the item by the operator from the upstream conveyor 13 onto the plate 21 as the two are located closely adjacent each other. In this example the plate 21 is rotated continuously and in the clockwise direction as shown in Figure 1 so that the goods move from the position A to the position B immediately above the window 26. Operation of the laser scanner is controlled by two optical actuating systems arranged to provide optical beams 28 and 29 respectively in advance of and after the window 26. Passage of the item past the beam 28 interrupts the beam and causes the laser scanner to be switched on so that as the item is conveyed through the position marked B the code is read by the scanner and the details recorded are registered on the register 27. Further travel of the plate 21 moves the item from the position B to the position C and in the course of this the item breaks the actuating beam 29 on the downstream side of the window 26 so as to switch off operation of the laser scanner until the next item is moved towards the position B. At position C a deflecting wall 30 is located above the glass plate 21 so that goods are automatically deflected off the plate 21 onto the downstream conveyor 15.

It will be appreciated that as the transparent annular plate 21 rotates continuously and arranges for automatic discharge of the goods onto the downstream conveyor 15, the only physical manipulation of the goods which is required by the operator occurs immediately adjacent the junction of the upstream conveyor 13 and the transparent plate 21 at the position marked A. This allows the operator to handle a rapid succession of items with little delay and the minimum of physical effort.

In the particular example above the entire checkout system is provided as a unitary free-standing unit surrounded by a peripheral wall 32 to retain goods on the unit. The beams 28 and 29 are provided by light sources mounted in a block 33 at one side of the unit and the beams are arranged to travel across the upper surface of the plate 21 so as to be detected by detectors mounted in the wall 34 (see Figure 2). The detectors in the wall 34 are coupled to the optical reader 25. In this particular example the beams may be of infra-red radiation although it will be appreciated that a number of alternative arrangements may be used. By arranging for the beams to pass on a path just above the plate they are able to detect very slim items which may be lying flat on the plate 21.

Although a number of specific details have been described above by way of example it will be appreciated that the invention is not limited to the specific details of the example described with reference to Figures 1 and 2. For example, the plate 21 may be formed of transparent plastics material such as a silicon skinned polycarbonate, instead of glass. Furthermore, the scanning beam of the reader 25 may be inclined at an angle to the vertical direction such as 45° to vertical. This may enable codes to be read on a downwardly facing face or on the vertical face of an item orientated to face the direction of travel of the ring.

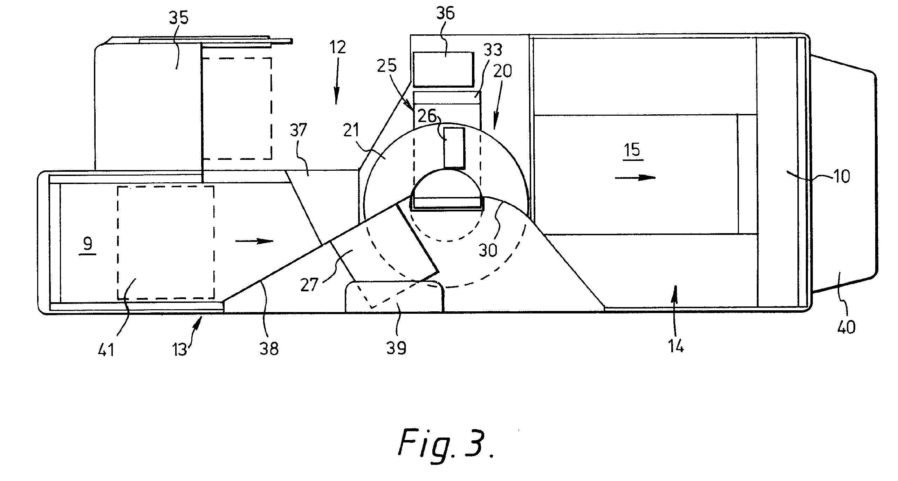

Figure 3 shows a plan view of an alternative embodiment of the invention which is generally similar to that of Figures 1 and 2 and similar reference numerals have been used for parts corresponding to those shown in Figures 1 and 2. The overall layout is slightly modified in Figure 3 but the optical reader 25 and glass plate 21 are the same as previously described with reference to Figures 1 and 2. In Figure 3 a cash drawer 35 shown in the open position in broken lines is located alongside the upstream section 13 and adjacent the operator station 12. The cash drawer 35 forms part of the price register system which includes the keyboard 27 and a printer 36 which is located adjacent the operator station 12. The upstream section 13 includes the conveyor 9 and a table 37 flush with the unloading end of the conveyor 9. The conveyor 9 passes below a plough wall 38 which is arranged to deflect the goods towards the operator station 12 and onto the table 37 which is located on the side of the upstream section 13 immediately in front of and adjacent the operator station 12. This facilitates the pick up of goods by the operator ready for positioning onto the plate 21 which is immediately adjacent the table 37. A further support plate 39 is located above the side of the keyboard 27 remote from the operator station 12 and is for use by customers wishing to write cheques for payment. In this example the downstream conveyor 15 leads straight to the discharge end 10 at which is positioned a shelf 40 which may be used for a variety of purposes including for example the storage of bags or the like. An electrical power supply 41 is located below the upstream conveyor and may be used as a power supply for the optical reader and for the price register and computer.

0036769

Claims:

1. A checkout system for registering articles bearing code markings, such as those sold at a supermarket outlet, which checkout system comprises an upstream reception section for receiving goods to be checked out, and a downstream discharge section from which the goods may be removed after checkout, characterised by an intermediate section (2) for conveying the goods from the upstream section (13) to the downstream section (14) and registering the goods on passage through the intermediate section, said intermediate section comprising a conveyor with a transport conveying surface (21), means (24) for driving the conveying surface past an optical reader (25) arranged to read the code markings on each article while conveyed on said conveying surface, the intermediate section being arranged so that goods may be readily passed from the upstream section (13) onto the conveying surface (21) and automatically discharged onto the downstream section (14), said checkout system further including registering means (27) coupled to said optical reader to provide a visual indication of details of the goods checked out.

2. A checkout system as claimed in claim 1 further characterised in that the optical reader (25) is located below the transport conveying surface (21) and said surface is transparent.

3. A checkout system as claimed in claim 1 or claim 2 further characterised in that the transport conveying surface (21) is arranged horizontally and to be driven in a rotary motion about a vertical axis.

4. A checkout system as claimed in any one of claims 1 to 3 further characterised in that the transport conveying surface comprises a flat, transparent annular plate (21).

5. A checkout system as claimed in claim 4 further characterised in that the plate (21) is made of glass and an electric motor (24) is provided to rotate the annular plate.

6. A checkout system as claimed in any one of the preceding claims further characterised in that the optical reader comprises a laser scanner (25).

7. A checkout system as claimed in claim 6 further characterised in that the laser scanner (25) comprises a housing having an upward facing scanning window (26) located below said annular plate (21) in the conveying path through the intermediate section (20).

8. A checkout system as claimed in claim 6 or claim 7 further characterised in that an optical actuating system (28) is located above the annular plate at a position upstream of said window and arranged to initiate operation of the laser scanner (25) on detecting arrival of an article on the plate (21), and a further optical actuating device (29) is located above the annular plate downstream of said window (26) and arranged to terminate operation of the laser as each article passes the further optical device after passing over said window (26).

9. A checkout system as claimed in claim 8 further characterised in that the optical actuating devices are arranged to provide optical beams (28,29) extending across the path of the annular plate (21) on either side of the window (26).

10. A checkout system as claimed in any one of the preceding claims further characterised in that the registering means (27) forms part of a computer system arranged to provide a cumulative record of sales data for management control purposes.

Fig.1.

Fig.2.

*Fig. 3.*

European Patent Office

**EUROPEAN SEARCH REPORT**

0036769

Application number

EP 81 30 1211

## DOCUMENTS CONSIDERED TO BE RELEVANT

| Category | Citation of document with indication, where appropriate, of relevant passages | Relevant to claim |
|---|---|---|
| | FR - A - 2 083 458 (R.C.A. CORP.)<br>* Figures 1-3; from page 2, line 36 to page 6, line 34 *<br>& US - A - 3 819 012<br>-- | 1,2, 6-10 |
| | CH - A - 530 195 (ZELLWEGER AG)<br>* Entire document *<br>-- | 1,2,8 |
| | FR - A - 1 508 299 (SPITE)<br>* Entire document *<br>-- | 1,3,4 |
| | US - A - 3 783 273 (STROHSCHNEIDER)<br>* Figure 1; Abstract; from column 2, line 38 to column 3, line 47 *<br>-- | 1,2,8, 9 |
| | GB - A - 1 445 100 (PLESSEY COMP)<br>* Figure 3; page 2, lines 21-38 *<br>---- | 1,2 |

**CLASSIFICATION OF THE APPLICATION (Int. Cl.³)**

G 06 K 7/10
A 47 F 9/02

**TECHNICAL FIELDS SEARCHED (Int. Cl.³)**

G 06 C 27/00
27/01
29/00
G 06 K 7/10
A 47 F 9/00
9/02
10/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 19-06-1981 | PESCHEL |

EPO Form 1503.1  06.78